# EUROPEAN PATENT APPLICATION

(11) **EP 4 757 090 A1**
(43) Date of publication of application: **10.06.2026**
(21) Application number: 24848168.1
(22) Date of filing: 26.07.2024
(51) Int. Cl.: H02H 3/08

(54) **CIRCUIT PROTECTION APPARATUS, BATTERY MANAGEMENT SYSTEM AND ELECTRICAL DEVICE**

(30) Priority: 02.08.2023 CN 202322059511 U
(71) Applicant: Contemporary Amperex Technology Co., Limited, Ningde, Fujian 352100 (CN)
(72) Inventor: HUANG, Yi, Ningde, Fujian 352100 (CN); YE, Fuming, Ningde, Fujian 352100 (CN); GUO, Maobo, Ningde, Fujian 352100 (CN)
(74) Representative: Ran, Handong
(86) International application number: PCT/CN2024/107785
(87) International publication number: WO 2025/026211

(57) **Abstract**

Disclosed in the present application are a circuit protection apparatus, a battery management system and an electrical device. The circuit protection apparatus comprises a current measurement module, a drive module and a fusing module. The current measurement module is separately connected to the drive module and a circuit undergoing test; and the current measurement module is configured to measure a current value in said circuit, and, when the current value is greater than a preset current threshold, to send a drive signal to the drive module. The fusing module is connected in series into said circuit. An input end of the drive module is connected to the current measurement module; an output end of the drive module is connected to the fusing module; and the drive module is configured to drive, when the drive signal is received, the fusing module to disconnect said circuit. When overcurrent occurs to circuits, the embodiments of the present application can reduce delay time for circuit disconnection control operations, so as to increase the speed of disconnecting the circuits, thus improving the effects of overcurrent protection.

## Description

### CROSS-REFERENCE TO RELATED APPLICATIONS

This application claims priority to Chinese Patent Application No. 202322059511.8, filed on August 2, 2023 and entitled "CIRCUIT PROTECTION APPARATUS, BATTERY MANAGEMENT SYSTEM AND ELECTRICAL DEVICE", which is incorporated herein by reference in its entirety.

### TECHNICAL FIELD

This application relates to the field of electronic technology, and in particular, to a circuit protection apparatus, a battery management system, and an electric device.

### BACKGROUND

In recent years, with the increasing number of electronic devices, the safety of electric circuits has gained growing attention. If a current in a circuit where a functional module is located exceeds a rated current of the functional module, resulting in overcurrent, the functional module in the circuit can be easily damaged.

In related technologies, to reduce a possibility of damage to functional modules in a circuit due to overcurrent, it is typically necessary to provide overcurrent protection for the functional modules during overcurrent, promptly controlling the circuit to disconnect. However, in conventional control methods, the collected circuit current value passes through multiple nodes, and then whether overcurrent occurs can be determined and the circuit can be controlled to disconnect, resulting in a long delay time. This prevents rapid disconnection of the circuit, thereby reducing effect of overcurrent protection.

### SUMMARY

This application provides a circuit protection apparatus, a battery management system, and an electric device, which can reduce a delay time of circuit disconnection control operations during overcurrent, ensure more timely circuit disconnection, and thereby enhance effect of overcurrent protection.

According to a first aspect, this application provides a circuit protection apparatus, including: a current detection module, a driver module, and a fuse module; where the current detection module is connected to the driver module and a circuit under test separately; and the current detection module is configured to detect a current value in the circuit under test, and in a case that the current value is greater than a preset current threshold, send a drive signal to the driver module; the fuse module is connected in series in the circuit under test; and an input end of the driver module is connected to the current detection module, an output end of the driver module is connected to the fuse module, and the driver module is configured to drive the fuse module to disconnect the circuit under test upon receiving the drive signal.

In embodiments of this application, the current detection module is directly connected to the driver module, and when the current detection module detects that the current value in the circuit under test is greater than the preset current threshold, the drive signal is directly sent to the driver module without passing through other multiple nodes. The current detection module directly controls the driver module to drive the fuse module to fuse the circuit under test based on the drive signal, thereby providing overcurrent protection for functional modules connected in the circuit under test. As the current detection module directly controls the driver module to drive the disconnection of the circuit under test, the signal does not pass through other multiple nodes. In this way, in the embodiments of this application, a delay time of circuit disconnection control operations can be reduced during overcurrent in the circuit, and circuit disconnection can be implemented more promptly, thereby enhancing the effect of overcurrent protection.

In some embodiments, the current detection module includes a comparison module; and the comparison module is configured to compare the current value with the preset current threshold, and in the case that the current value is greater than the preset current threshold, send a drive signal to the driver module.

The comparison module is provided in the current detection module to perform a hardware-based comparison of the current value in the circuit under test with the preset current threshold. The drive signal is sent to the driver module in the case that the current value in the circuit under test is greater than the preset current threshold, enabling the driver module to drive the fuse module to disconnect the circuit under test based on the drive signal. This hardware-based determination process improves reliability of an overcurrent determination result and reliability of circuit disconnection control operations when overcurrent occurs.

In some embodiments, the current detection module includes a current collection module and a threshold input module; and an input end of the driver module includes a signal input end; an input end of the current collection module is connected to the circuit under test, an output end of the current collection module is connected to a first input end of the comparison module, and the current collection module is configured to collect a current value in the circuit under test and input the current value to the comparison module; the threshold input module is connected to a second input end of the comparison module, and the threshold input module is configured to input the preset current threshold to the comparison module; and an output end of the comparison module is connected to the signal input end of the driver module.

As the output end of the current collection module is connected to the first input end of the comparison module and the threshold input module is connected to the second input end of the comparison module, a signal source is provided for the comparison module. When the current value in the circuit under test is greater than the preset current threshold, a drive signal is sent to the driver module, enabling the driver module to drive the fuse module to disconnect the circuit under test based on the drive signal. This hardware-based determination process improves reliability of an overcurrent determination result and reliability of circuit disconnection control operations when overcurrent occurs.

In some embodiments, the comparison module includes at least two comparators; and a first input end of each of the at least two comparators is connected to the output end of the current collection module, a second input end of each of the at least two comparators is connected to the threshold input module, and an output end of each of the at least two comparators is connected to the input end of the driver module.

The provision of at least two comparators in the current detection module for independent comparison of the current value and the redundant design of hardware behavior reduce a possibility of erroneous fuse of the circuit under test due to hardware damage, further improving the reliability of circuit disconnection control operations when overcurrent occurs.

In some embodiments, each of the at least two comparators is configured to compare the current value with the preset current threshold, and in the case that the current value is greater than the preset current threshold, send a target logic signal to the driver module; and the drive signal includes target logic signals sent by the at least two comparators respectively.

The driver module is controlled to drive the disconnection of the circuit under test in a case that all of the at least two comparators determine that the current value in the circuit under test is greater than the preset current threshold, so that the possibility of erroneous triggering of disconnection of circuit under test is reduced.

In some embodiments, the current collection module is provided with at least two current sampling paths, and a current value collected by one current sampling path is correspondingly input to one comparator.

At least two current sampling paths are provided, and different comparators perform overcurrent determination on current values collected by different current sampling paths, reducing a possibility that erroneous triggering of overcurrent protection operations due to unstable current values collected by the current sampling paths, further improving the reliability of circuit disconnection control operations when overcurrent occurs.

In some embodiments, the at least two comparators include a first comparator and a second comparator; and the signal input end of the driver module includes a first signal input end and a second signal input end; a first input end of the first comparator is connected to the current collection module, a second input end of the first comparator is connected to the threshold input module, an output end of the first comparator is connected to the first signal input end of the driver module, and the first comparator is configured to compare a first current value with the preset current threshold, and in a case that the first current value is greater than the preset current threshold, send a first logic signal to the driver module, where the first current value is a current value collected by a first current sampling path in the current collection module; a first input end of the second comparator is connected to the current collection module, a second input end of the second comparator is connected to the threshold input module, an output end of the second comparator is connected to the second signal input end of the driver module, and the second comparator is configured to compare a second current value with the preset current threshold, and in a case that the second current value is greater than the preset current threshold, send a second logic signal to the driver module, where the second current value is a current value collected by a second current sampling path in the current collection module; and the drive signal includes the first logic signal and the second logic signal.

The first comparator and the second comparator are provided, the first comparator performs overcurrent determination on the first current value collected by the first current sampling path, and the second comparator performs overcurrent determination on the second current value collected by the second current sampling path. The circuit under test is fused in a case that both comparators determine that overcurrent occurs, reducing the possibility of erroneous overcurrent determination and further improving the reliability of circuit disconnection control operations when overcurrent occurs.

In some embodiments, the current detection module further includes a control module; and the input end of the driver module includes a command input end; the control module is connected to the output end of the current collection module and the command input end of the driver module, and the control module is configured to acquire the current value collected by the current collection module and state information corresponding to the driver module, and in a case that the current value is greater than the preset current threshold and the state information indicates a non-driven state, send a fuse control command to the driver module; and the driver module is further configured to drive the fuse module to disconnect the circuit under test upon receiving the fuse control command.

The control module in the current detection module reads a state of the driver module and verifies an overcurrent determination result, and the redundant design of software behavior is added, reducing the possibility that the circuit under test is not disconnected when overcurrent occurs, further improving the reliability of circuit disconnection control operations when overcurrent occurs.

In some embodiments, the current collection module includes an analog-to-digital conversion module and a shunt module; where the shunt module is connected in series in the circuit under test; an input end of the analog-to-digital conversion module is connected to two ends of the shunt module, forming a current sampling path; and an output end of the analog-to-digital conversion module is connected to the first input end of the comparison module.

The analog-to-digital conversion module in the current collection module is connected to the shunt module connected in series in the circuit under test, forming a current sampling path. This allows the current value in the circuit under test to be determined by detecting current passing through the shunt module, so that the current value of the circuit under test can be collected, thereby improving accuracy of collection results.

In some embodiments, the circuit under test includes a power supply bus connected to a power source.

According to a second aspect, this application provides a battery management system, including a circuit under test and the circuit protection apparatus according to any of the embodiments described above.

According to a third aspect, this application provides an electric device, including the battery management system according to any of the embodiments described above.

The above description is only an overview of the technical solutions of this application. To provide a clearer understanding of the technical means of this application, the content of the specification can be implemented, and to make the above and other objectives, features, and advantages of this application more apparent, specific embodiments of this application are provided below.

### BRIEF DESCRIPTION OF DRAWINGS

Various other advantages and benefits become apparent to those of ordinary skill in the art upon reading the detailed description of the preferred embodiments below. The drawings are provided solely for the purpose of illustrating the preferred embodiments and are not considered a limitation of this application. Throughout the drawings, identical components are denoted by identical reference signs. In the drawings:
FIG. 1 is a schematic structural diagram of a circuit protection apparatus provided in some embodiments of this application;
FIG. 2 is a schematic structural diagram of a circuit protection apparatus provided in some embodiments of this application;
FIG. 3 is a schematic structural diagram of a circuit protection apparatus provided in some embodiments of this application;
FIG. 4 is a schematic structural diagram of a circuit protection apparatus provided in some embodiments of this application;
FIG. 5 is a schematic structural diagram of a circuit protection apparatus provided in some embodiments of this application;
FIG. 6 is a schematic structural diagram of a circuit protection apparatus provided in some embodiments of this application; and
FIG. 7 is a schematic structural diagram of a battery management system provided in some embodiments of this application.

Reference signs in the specific embodiments are as follows:
100. battery management system;
10. circuit protection apparatus; 20. circuit under test;
11. current detection module; 12. driver module; 13. fuse module;
111. current collection module; 112. threshold input module; 113. comparison module; 114. control module;
1111. analog-to-digital conversion module; 1112. shunt module; 1101. first current sampling path; 1102. second current sampling path; 1131. first comparator; and 1132. second comparator.

### DESCRIPTION OF EMBODIMENTS

The embodiments of the technical solutions of this application are described in detail below with reference to the drawings. The following embodiments are only used to illustrate the technical solutions of this application more clearly and are not intended to limit the protection scope of this application.

Unless otherwise defined, all technical and scientific terms used herein have the same meaning as commonly understood by those skilled in the art of this application; the terms used herein are for the purpose of describing specific embodiments only and are not intended to limit this application; the terms "include" and "have" and any variations thereof in the specification, claims, and the above description of the drawings of this application are intended to cover non-exclusive inclusion.

In the description of the embodiments of this application, technical terms such as "first" and "second" are used only to distinguish different objects and should not be construed as indication or implication of relative importance or implicit indication of a quantity, specific order, or primary-secondary relationship of the indicated technical features. In the description of the embodiments of this application, "multiple" means two or more, unless explicitly specified otherwise.

Reference to an "embodiment" herein means that a particular feature, structure, or characteristic described with reference to the embodiment may be included in at least one embodiment of this application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein may be combined with other embodiments.

In the description of the embodiments of this application, the term "and/or" merely describes an association relationship between associated objects, indicating that three relationships may exist, for example, A and/or B may indicate: A alone, both A and B, or B alone. Additionally, the character "/" herein generally indicates an "or" relationship between the associated objects.

In the description of the embodiments of this application, the term "multiple" refers to two or more (including two). Similarly, "multiple groups" refers to two or more groups (including two groups), and "multiple pieces" refers to two or more pieces (including two pieces).

In the description of the embodiments of this application, unless explicitly specified and limited otherwise, technical terms such as "mounting", "joining", "connection", and "fixation" should be understood broadly, for example, as fixed connections, detachable connections, or integral connections; mechanical connections or electrical connections; direct connections or indirect connections through intermediaries; or internal communication between two elements or interaction relationships between two elements. Those of ordinary skill in the art can understand the specific meanings of the above terms in the embodiments of this application based on specific circumstances.

Currently, the conventional overcurrent protection control process requires the participation of an MCU (Microcontroller Unit, microcontroller unit). When an overcurrent event occurs in a circuit under test, a current detection module, after collecting a current value, needs to transmit the current value to an isolation module via a bus, and then the isolation module feeds the current value to the MCU via the bus. The MCU determines whether the circuit under test is in an overcurrent state based on the received current value. If a software program determines that the circuit under test is in an overcurrent state, the MCU controls the driver module to drive the disconnection of the circuit under test. In this overcurrent protection control process, due to the numerous signal transmission nodes, from current value detection to control over fuse of the circuit under test, signals pass multiple signal transmission nodes including the isolation module, MCU, and driver module, and therefore it is not possible to promptly control the disconnection of the circuit under test during an overcurrent event in the circuit under test, resulting in a long delay time, reducing effect of overcurrent protection.

To address the above technical issues, in the embodiments of this application, a current detection module is directly connected to a driver module. When the current detection module detects that a current value in a circuit under test is greater than a preset current threshold, a drive signal is directly sent to the driver module without passing through other nodes such as an isolation module or MCU. The current detection module directly controls the driver module to drive a fuse module to fuse the circuit under test based on the drive signal, thereby providing overcurrent protection for functional modules connected in the circuit under test. As the current detection module directly controls the driver module to disconnect the circuit under test, the signal does not pass through other multiple nodes. In this way, in the embodiments of this application, a delay time of circuit disconnection control operations can be reduced during overcurrent in the circuit, and circuit disconnection can be implemented more promptly, thereby enhancing effect of overcurrent protection.

A circuit protection apparatus disclosed in the embodiments of this application can be used, but is not limited to, in a BMS (Battery Management System, battery management system) of electric device such as vehicles, ships, or aircraft. For example, in a BMS of an electric device, for a bus connected to a power source, as multiple functional modules in the electric device are connected to this bus, to reduce a possibility of damage to components of these functional modules due to bus overcurrent, it is necessary to promptly control disconnection of the bus during overcurrent in the bus.

Based on this, to promptly control the disconnection of the bus, reduce a delay time, and enhance the effect of overcurrent protection during an overcurrent event of the bus, the circuit protection apparatus provided in the embodiments of this application can be used to protect functional modules connected to the bus. As the current detection module in the circuit protection apparatus provided in the embodiments of this application can directly control a driver module to drive the fuse of the bus, the signal does not pass through other multiple nodes. In this way, a delay time of bus disconnection control operations can be reduced during overcurrent in the bus, and bus disconnection can be implemented more promptly, thereby enhancing the effect of overcurrent protection for the functional modules connected to the bus.

The circuit protection apparatus provided in the embodiments of this application is described in detail below.

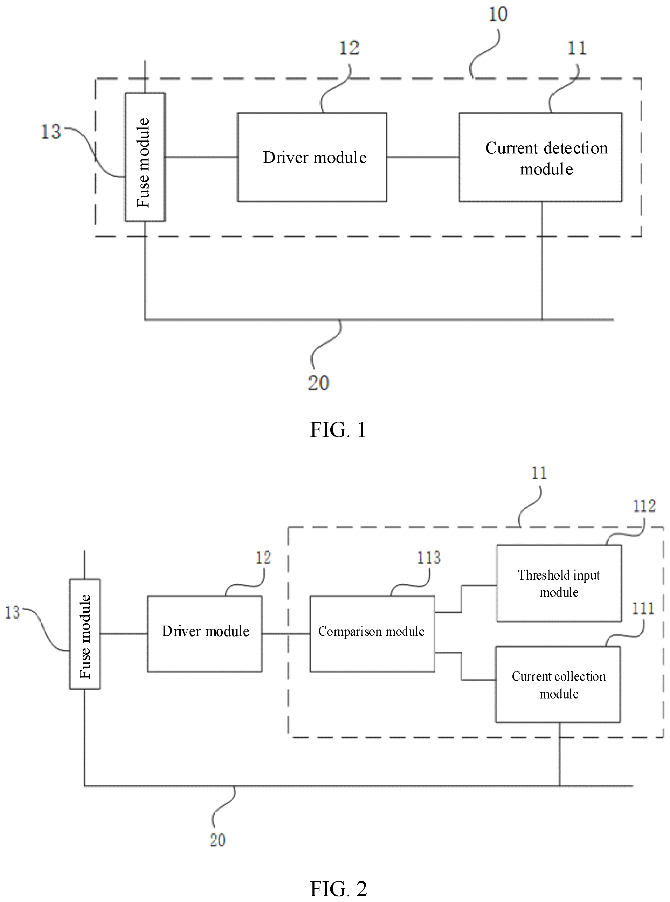

FIG. 1 is a schematic structural diagram of a circuit protection apparatus provided in some embodiments of this application. As shown in FIG. 1, the circuit protection apparatus 10 includes a current detection module 11, a driver module 12, and a fuse module 13.

The current detection module 11 is connected to the driver module 12 and the circuit under test 20 separately. The current detection module 11 is configured to detect a current value in the circuit under test 20, and in a case that the current value is greater than a preset current threshold, send a drive signal to the driver module 12. The fuse module 13 is connected in series in the circuit under test 20. An input end of the driver module 12 is connected to the current detection module 11, and an output end of the driver module 12 is connected to the fuse module 13. The driver module 12 is configured to drive the fuse module 13 to disconnect the circuit under test 20 upon receiving the drive signal.

Herein, the current detection module 11 may be a functional module capable of collecting a current value in the circuit under test 20, the driver module 12 may be a module capable of driving the fuse module 13 to fuse, and the fuse module 13 may be a module capable of disconnecting the circuit under test 20.

The fuse module 13 may include a fuse, such as a Pyrofuse. A Pyrofuse, also known as a Pyroswitch or Pyrotechnical safety switche (PSS), is an explosive fuse, high-temperature fuse, pyrotechnic control switch, or instantaneous circuit breaker. In battery applications, a Pyrofuse mainly acts as a switch, cutting off power source in a very short time during collisions, short circuits, or other safety faults to reduce a possibility of hazardous events. In a case that the fuse module 13 is a Pyrofuse, the driver module 12 may correspondingly be a module capable of driving the Pyrofuse.

In some embodiments of this application, the circuit under test 20 may include a power supply bus connected to a power source. The power source may, for example, be a high-voltage power source, and correspondingly, the circuit under test 20 may, for example, be a high-voltage bus.

For example, the current detection module 11 is connected to the circuit under test 20, and can collect a current value in the circuit under test 20, and compares the collected current value with a preset current threshold through a hardware circuit, where the preset current threshold may be set based on rated current conditions of the functional modules actually connected to the circuit under test. When the current detection module 11 determines that the collected current value is greater than the preset current threshold, the current detection module 11 sends a drive signal to the driver module 12 through the hardware circuit, enabling the driver module 12 to drive the fuse module 13 to disconnect the circuit under test 20 upon receiving the drive signal. Herein, the drive signal may be a signal generated by the hardware circuit to activate the driver module 12, such as a level signal or a PWM (Pulse Width Modulation, pulse width modulation) signal, where the level signal may include, for example, a low level or a high level.

Additionally, when the current detection module 11 determines that the collected current value is not greater than the preset current threshold, the current detection module 11 may send a non-drive signal to the driver module 12 through the hardware circuit, that is, a signal other than the drive signal, where the non-drive signal cannot activate the driver module 12.

It should be noted that the driver module 12 drives the fuse module 13 to fuse, thereby disconnecting the circuit under test 20 when the driver module 12 receives the drive signal sent by the current detection module 11, protecting the functional modules connected in the circuit under test 20. When the driver module 12 receives a non-drive signal sent by the current detection module 11, the driver module 12 does not drive the fuse module 13 to fuse.

In this case, the current detection module is directly connected to the driver module, and when the current detection module detects that the current value in the circuit under test is greater than the preset current threshold, the drive signal is directly sent to the driver module without passing through other multiple nodes. The current detection module directly controls the driver module to drive the fuse module to fuse the circuit under test based on the drive signal, thereby providing overcurrent protection for functional modules connected in the circuit under test. As the current detection module directly controls the driver module to drive the disconnection of the circuit under test, the signal does not pass through other multiple nodes. In this way, in the embodiments of this application, a delay time of circuit disconnection control operations can be reduced during overcurrent in the circuit, and circuit disconnection can be implemented more promptly, thereby enhancing the effect of overcurrent protection.

In some embodiments of this application, the current detection module may include a comparison module. The comparison module is configured to compare the current value with the preset current threshold, and in the case that the current value is greater than the preset current threshold, send a drive signal to the driver module.

Herein, the comparison module may be a hardware module capable of comparing magnitudes of level signals and outputting a comparison result. The comparison module may, for example, include a comparator.

In this way, the comparison module is provided in the current detection module to perform a hardware-based comparison of the current value in the circuit under test with the preset current threshold. The drive signal is sent to the driver module in the case that the current value in the circuit under test is greater than the preset current threshold, enabling the driver module to drive the fuse module to disconnect the circuit under test based on the drive signal. This hardware-based determination process improves reliability of an overcurrent determination result and reliability of circuit disconnection control operations when overcurrent occurs.

In some embodiments of this application, as shown in FIG. 2, the current detection module 11 includes a current collection module 111, a threshold input module 112, and a comparison module 113. An input end of the driver module 12 may include a signal input end.

An input end of the current collection module 111 is connected to the circuit under test 20, an output end of the current collection module 111 is connected to a first input end of the comparison module 113, and the current collection module 111 is configured to collect a current value in the circuit under test 20 and input the current value to the comparison module 113.

The threshold input module 112 is connected to a second input end of the comparison module 113, and the threshold input module 112 is configured to input the preset current threshold to the comparison module 113.

An output end of the comparison module 113 is connected to the signal input end of the driver module 12.

Herein, the current collection module 111 may be a module capable of collecting the current value in the circuit under test 20, and the current collection module 111 may further convert the current value into a corresponding level signal and input the level signal to the first input end of the comparison module 113.

The threshold input module 112 may be a module capable of generating a level signal corresponding to the preset current threshold.

In some embodiments, the threshold input module 112 may include a hardware module, for example, including a reference power source and a voltage divider resistor, where one end of the voltage divider resistor is connected to the second input end of the comparison module 113, and another end of the voltage divider resistor is connected to the reference power source. After being divided, a voltage provided by the reference power source is converted into a level signal corresponding to the preset current threshold and input to the comparison module 113.

In other embodiments, the threshold input module 112 may include a software module, for example, a control module in the current detection module 11. The control module is configured to control the generation of a level signal corresponding to the preset current threshold with a software program, and input the level signal to the comparison module 113 through a pin connecting the control module to the comparison module 113. In some embodiments, after receiving the level signal corresponding to the current value of the circuit under test input by the current collection module 111 through the first input end and receiving the level signal corresponding to the preset current threshold input by the threshold input module 112, the comparison module 113 may compare the two level signals. In a case that the level signal corresponding to the current value of the circuit under test is greater than the level signal corresponding to the preset current threshold, that is, the current value of the circuit under test is greater than the preset current threshold, a corresponding drive signal may be sent to the driver module 12, and the drive signal may include a specific logic signal, such as logic 1, where the logic 1 may be represented by a high level. In a case that the level signal corresponding to the current value of the circuit under test is not greater than the level signal corresponding to the preset current threshold, that is, the current value of the circuit under test is not greater than the preset current threshold, a corresponding non-drive signal may be sent to the driver module 12, and the non-drive signal may include a logic signal other than logic 1, such as logic 0, where logic 0 may be represented by a low level.

Additionally, the input end of the driver module 12 may include a signal input end, and the signal input end may be connected to the output end of the comparison module 113 to receive the drive signal output by the comparison module 113.

In this case, as the output end of the current collection module is connected to the first input end of the comparison module and the threshold input module is connected to the second input end of the comparison module, a signal source is provided for the comparison module. When the current value in the circuit under test is greater than the preset current threshold, a drive signal is sent to the driver module, enabling the driver module to drive the fuse module to disconnect the circuit under test based on the drive signal. This hardware-based determination process improves reliability of an overcurrent determination result and reliability of circuit disconnection control operations when overcurrent occurs.

Based on this, to further improve the reliability of circuit disconnection control operations when overcurrent occurs and reduce a possibility of erroneous fuse of the circuit under test, in some embodiments of this application, the comparison module may include at least two comparators.

A first input end of each of the at least two comparators is connected to the output end of the current collection module, a second input end of each of the at least two comparators is connected to the threshold input module, and an output end of each of the at least two comparators is connected to the input end of the driver module.

Herein, a comparator may be configured to compare data items input at two input ends based on hardware behavior to determine a magnitude relationship. Each comparator may have two input ends, two inputs of the comparator may be level signals, and an output may be a binary logic signal (for example, 0 or 1). For example, when the comparator determines that the level signal corresponding to the current value of the circuit under test is greater than the level signal corresponding to the preset current threshold, a logic signal 1, that is, a high level, may be output; and when the comparator determines that the level signal corresponding to the current value of the circuit under test is not greater than the level signal corresponding to the preset current threshold, a logic signal 0, that is, a low level may be output. Alternatively, when the current value of the circuit under test is greater than the preset current threshold, a logic signal 0, that is, a low level may be output; and when the current value of the circuit under test is not greater than the preset current threshold, a logic signal 1, that is, a high level may be output.

In this way, the provision of at least two comparators in the current detection module for independent comparison of the current value and the redundant design of hardware behavior reduce a possibility of erroneous fuse of the circuit under test due to hardware damage, further improving the reliability of circuit disconnection control operations when overcurrent occurs.

Based on this, in some embodiments of this application, each of the at least two comparators is configured to compare the current value with the preset current threshold, and in a case that the current value is greater than the preset current threshold, send a target logic signal to the driver module. The drive signal includes target logic signals sent by the at least two comparators respectively.

Herein, the target logic signal may be the logic signal output when the current value of the circuit under test is not greater than the preset current threshold.

For example, the driver module may drive the fuse module to disconnect the circuit under test upon receiving logic signals from all comparators indicating that the current value of the circuit under test is greater than the preset current threshold, namely, the target logic signals; and the driver module may not perform the drive operation, in other words, may not drive the disconnection of the circuit under test when the driver module receives a logic signal from at least one comparator indicating that the current value of the circuit under test is not greater than the preset current threshold.

For example, the comparison module includes three comparators. In some specific examples, in a case that all comparators output a logic signal 1 when the comparators independently determine that the level signal corresponding to the current value of the circuit under test is greater than the level signal corresponding to the preset current threshold, and output a logic signal 0 when the comparators determine that the level signal corresponding to the current value of the circuit under test is not greater than the level signal corresponding to the preset current threshold, the driver module drives the fuse module to disconnect the circuit under test upon receiving logic signals 111 from the three comparators; and when the logic signals received from the three comparators are not 111 (for example, 101, 010, or 110), the drive operation is not performed. Thus, even if one comparator is damaged, erroneous triggering of circuit disconnection does not occur.

In this way, the driver module is controlled to drive the disconnection of the circuit under test in a case that all of the at least two comparators determine that the current value in the circuit under test is greater than the preset current threshold, so that the possibility of erroneous triggering of circuit disconnection is reduced. Additionally, the current collection module may be provided with at least one current sampling path. When there is only one current sampling path, a current value collected by this current sampling path may be input to all the comparators, in other words, a current value of the circuit under test received by each comparator is the same current value collected by the same current sampling path.

To improve reliability of current sampling results, in some embodiments of this application, the current collection module may be provided with at least two current sampling paths, and a current value collected by one current sampling path is correspondingly input to one comparator.

For example, in a case that the comparison module includes three comparators and the current collection module is provided with three current sampling paths, current values collected by the three current sampling paths may be input to the three comparators respectively, so that each comparator independently determines whether overcurrent occurs in the circuit under test.

In this way, at least two current sampling paths are provided, and different comparators perform overcurrent determination on current values collected by different current sampling paths, reducing a possibility that erroneous triggering of overcurrent protection operations due to unstable current values collected by the current sampling paths, further improving the reliability of circuit disconnection control operations when overcurrent occurs.

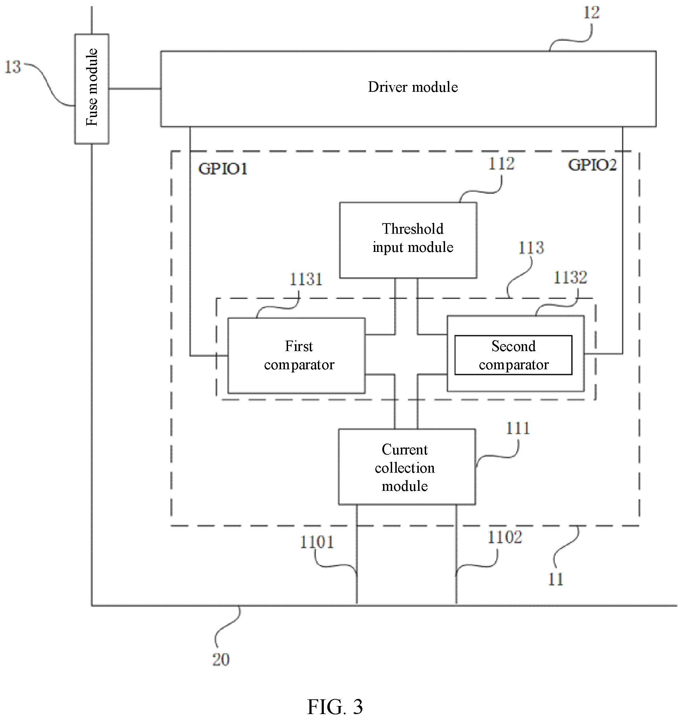

For example, the comparison module 113 includes two comparators in the following descriptions. In some embodiments of this application, as shown in FIG. 3, the at least two comparators include a first comparator 1131 and a second comparator 1132. The signal input end of the driver module 12 includes a first signal input end and a second signal input end.

A first input end of the first comparator 1131 is connected to the current collection module 111, a second input end of the first comparator 1131 is connected to the threshold input module 112, and an output end of the first comparator 1131 is connected to the first signal input end of the driver module 12. The first comparator 1131 is configured to compare a first current value with the preset current threshold, and in a case that the first current value is greater than the preset current threshold, send a first logic signal to the driver module 12, where the first current value is a current value collected by a first current sampling path 1101 in the current collection module 111.

A first input end of the second comparator 1132 is connected to the current collection module 111, a second input end of the second comparator 1132 is connected to the threshold input module 112, and an output end of the second comparator 1132 is connected to the second signal input end of the driver module 12. The second comparator 1132 is configured to compare a second current value with the preset current threshold, and in a case that the second current value is greater than the preset current threshold, send a second logic signal to the driver module 12, where the second current value is a current value collected by a second current sampling path 1102 in the current collection module 111.

In the embodiments of this application, the drive signal may specifically include the first logic signal and the second logic signal.

Herein, the first comparator 1131 and the second comparator 1132 may be two opposite comparators. To be specific, the first comparator 1131 and the second comparator 1132 output opposite logic signals based on a determination result that the current value of the circuit under test is greater than the preset current threshold, in other words, the first logic signal and the second logic signal may be opposite signals. For example, the first comparator 1131 outputs a logic signal of logic 1 when determining overcurrent occurs, and the second comparator 1132 outputs a logic signal of logic 0 when determining overcurrent occurs. Alternatively, the first comparator 1131 and the second comparator 1132 may be two identical comparators. To be specific, the first comparator 1131 and the second comparator 1132 output a same logic signal when determining that the current value of the circuit under test is greater than the preset current threshold, in other words, the first logic signal and the second logic signal may be the same signal. For example, the first comparator 1131 outputs a logic signal of logic 1 when determining overcurrent occurs, and the second comparator 1132 also outputs a logic signal of logic 1 when determining overcurrent occurs.

Additionally, the first comparator 1131 may perform overcurrent determination on the first current value collected by the first current sampling path 1101 in the current collection module 111, comparing the first current value with the preset current threshold; and the second comparator 1132 may perform overcurrent determination on the second current value collected by the second current sampling path 1102 in the current collection module 111, comparing the second current value with the preset current threshold.

For example, the output end of the first comparator 1131 may be connected to the driver module 12 through a pin GPIO 1 of the current detection module 11, and the output end of the second comparator 1132 may be connected to the driver module 12 through a pin GPIO 2 of the current detection module 11.

A signal input end of the driver module 12 may specifically include a first signal input end and a second signal input end, where the first signal input end is connected to the output end of the first comparator 1131, and the second signal input end is connected to the output end of the second comparator 1132.

In some examples, after independent overcurrent determination, the first comparator 1131 and the second comparator 1132 may output respective determination results to the driver module 12. For example, the first comparator 1131 and the second comparator 1132 are two opposite comparators. If under normal conditions, the first comparator 1131 outputs a low level corresponding to logic 0, and the second comparator 1132 outputs a high level corresponding to logic 1, then when the first comparator 1131 determines that the first current value is greater than the preset current threshold, the first comparator 1131 may output a high level corresponding to logic 1 to the driver module 12, and when the second comparator 1132 determines that the second current value is greater than the preset current threshold, the second comparator 1132 may output a low level corresponding to logic 0 to the driver module 12. When the driver module 12 receives a high level from the first comparator 1131 and a low level from the second comparator 1132, the driver module 12 may determine that a drive signal is received, thereby driving the fuse module 13 to disconnect the circuit under test 20. If the first comparator 1131 outputs a high level and the second comparator 1132 also outputs a high level, or if the first comparator 1131 outputs a low level and the second comparator 1132 also outputs a low level, the driver module 12 does not receive the set drive signal, and the driver module 12 may not perform the drive operation.

In this way, the first comparator and the second comparator are provided, the first comparator performs overcurrent determination on the first current value collected by the first current sampling path, and the second comparator performs overcurrent determination on the second current value collected by the second current sampling path. The circuit under test is fused in a case that both comparators determine that overcurrent occurs, reducing the possibility of erroneous overcurrent determination and further improving the reliability of circuit disconnection control operations when overcurrent occurs.

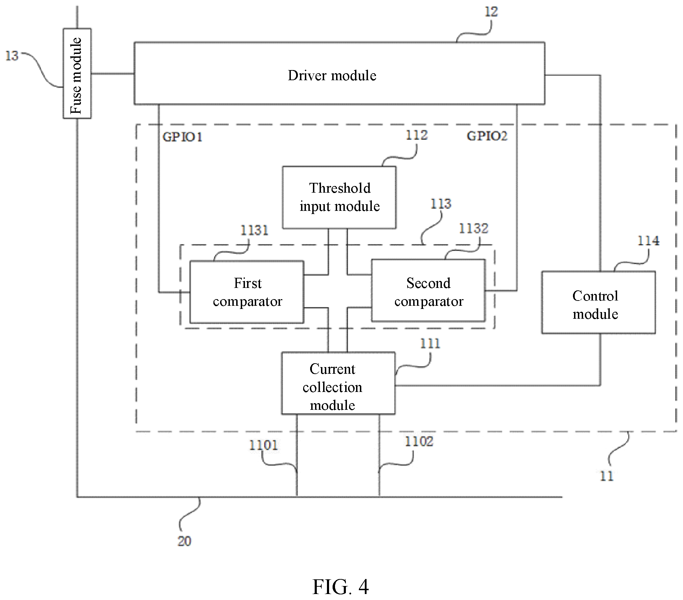

To reduce a possibility that the circuit under test is not disconnected when overcurrent occurs, embodiments of this application further introduce a redundant design of software behavior. Based on this, in some embodiments of this application, as shown in FIG. 4, the current detection module 11 may further include a control module 114. The input end of the driver module 12 includes a command input end.

The control module 114 is connected to the output end of the current collection module 111 and the command input end of the driver module 12, the control module 114 is configured to acquire the current value collected by the current collection module 111 and state information corresponding to the driver module 12, and send a fuse control command to the driver module 12 in a case that the current value is greater than the preset current threshold and the state information indicates a non-driven state.

The driver module 12 is further configured to drive the fuse module 13 to disconnect the circuit under test 20 upon receiving the fuse control command.

Herein, in FIG. 4, the control module 114 and the threshold input module 112 may be different modules or the same module (not shown in FIG. 4), in other words, the control module 114 may provide the preset current threshold to the comparison module 113.

The input end of the driver module 12 may further include a command input end. The command input end can receive a software control command sent by another module, such as a fuse control command, to enable control of the driver module 12 through software for drive operations.

To reduce a possibility that the circuit under test 20 is not disconnected when overcurrent occurs in the circuit under test 20 due to damage to the comparison module, in embodiments of this application, a software program in the control module 114 may further be used to verify the disconnection condition, ensuring timely disconnection of the circuit under test 20 when overcurrent occurs but the circuit under test 20 is not disconnected.

For example, the control module 114 may read state information stored in a register of the driver module 12 and acquire the current value of the circuit under test 20 collected by the current collection module 111 to verify the drive signal output by the comparison module 113 to the driver module 12. In the case of consistent verification, to be specific, the current value is greater than the preset current threshold and the state information indicates a driven state, the control module 114 may not send a fuse control command to the driver module 12 and may continue to wait for the next verification cycle. In the case of inconsistent verification, to be specific, when the current value is greater than the preset current threshold but the state information indicates a non-driven state, the control module 114 may send a fuse control command to the driver module 12 via an SPI (Serial Peripheral Interface, serial peripheral interface) protocol to control the disconnection of the circuit under test 20 through software behavior.

In this way, the control module in the current detection module is used to read a state of the driver module and verify an overcurrent determination result, and the redundant design of software behavior is added, reducing the possibility that the circuit under test is not disconnected when overcurrent occurs, further improving the reliability of circuit disconnection control operations when overcurrent occurs.

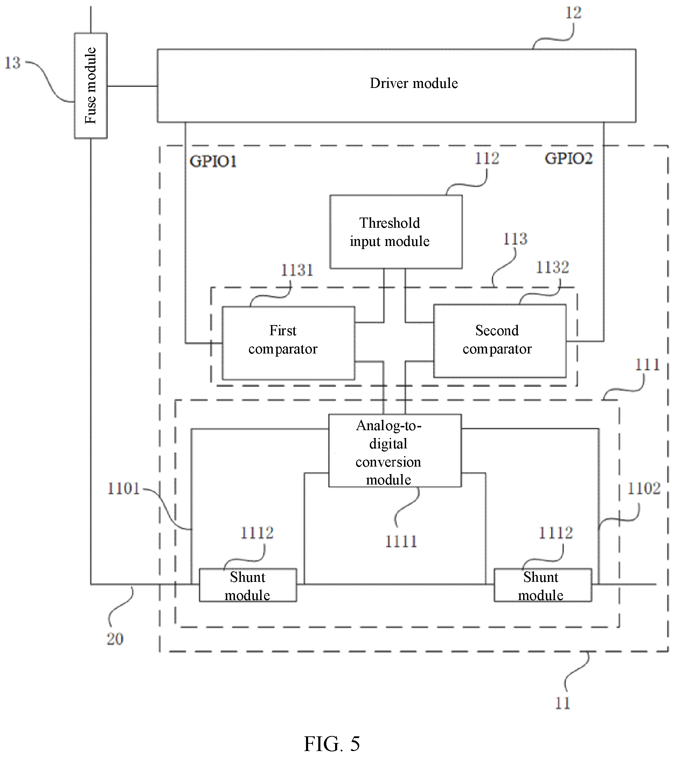

Additionally, in some embodiments of this application, as shown in FIG. 5, the current collection module 111 includes an analog-to-digital conversion module 1111 and a shunt module 1112. The shunt module 1112 is connected in series in the circuit under test 20. An input end of the analog-to-digital conversion module 1111 is connected to two ends of the shunt module 1112, forming a current sampling path. An output end of the analog-to-digital conversion module 1111 is connected to the first input end of the comparison module 113.

Herein, the analog-to-digital conversion module 1111 may be a module capable of converting an analog signal to a digital signal, and the shunt module 1112 may be a module capable of being connected in series in the circuit under test 20 and assisting in collecting the current value in the circuit under test 20, for example, may be a shunt Shunt.

In the embodiments of this application, the analog-to-digital conversion module 1111 may support multiple differential sampling, specifically sampling one shunt module 1112 multiple times or sampling multiple shunt modules 1112 separately. FIG. 5 shows a case of sampling two shunt modules 1112 separately, forming a first current sampling path 1101 for sampling one shunt module 1112 and a second current sampling path 1102 for sampling another shunt module 1112. Certainly, if there is only one shunt module, multiple current sampling paths may be constructed for the same shunt module. In this case, the same shunt module is sampled through different current sampling paths. This is not limited herein.

The operating principle of the current collection module 111 may be to perform voltage detection on one or more shunt modules 1112 connected in series in the circuit under test 20, and then the analog-to-digital conversion module 1111 calculates the current value flowing through the shunt module 1112, that is, the current value in the circuit under test 20, based on the detected voltage value and a resistance value of the shunt module 1112.

In this way, the analog-to-digital conversion module in the current collection module is connected to the shunt module connected in series in the circuit under test, forming a current sampling path. This allows the current value in the circuit under test to be determined by detecting the current value of the shunt module, so that the current value of the circuit under test can be collected, thereby improving accuracy of collection results.

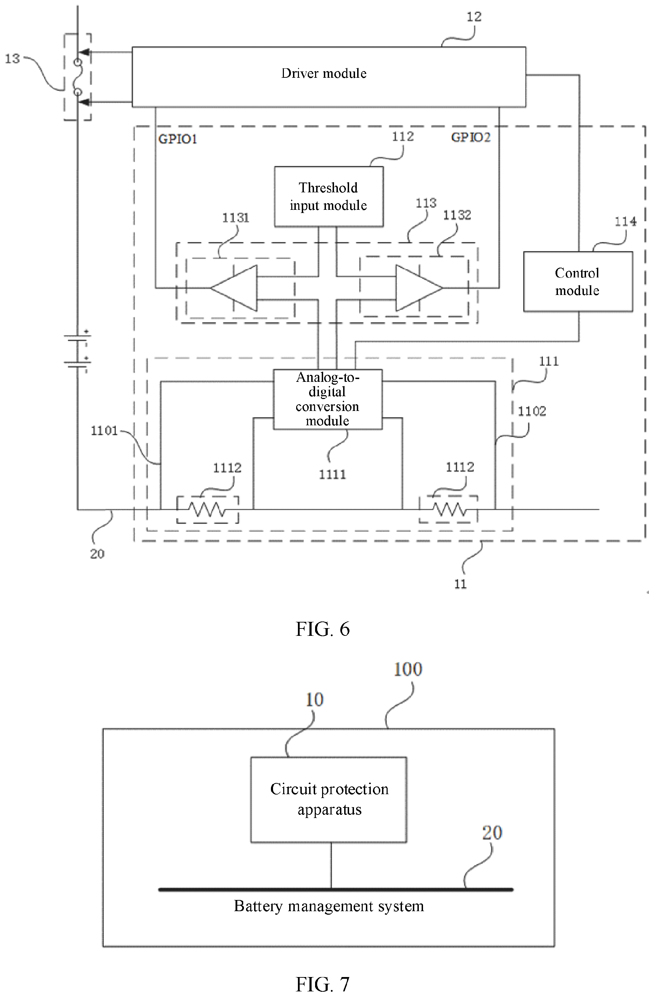

Based on the above embodiments, some specific examples are provided below with reference to FIG. 6 to describe the entire solution more clearly.

FIG. 6 is a schematic structural diagram of a circuit protection apparatus provided in some embodiments of this application.

As shown in FIG. 6, for example, the circuit under test 20 is a power supply bus connected to a power source, and the circuit protection apparatus 10 may include a current detection module 11, a driver module 12, and a fuse module 13. The current detection module 11 may include a current collection module 111, a threshold input module 112, a comparison module 113, and a control module 114, where the threshold input module 112 and the control module 114 may be the same module, the fuse module 13 may include a Pyrofuse, and the driver module 12 may include a driver for the Pyrofuse.

For each module in the current detection module 11, the current collection module 111 may include an analog-to-digital conversion module 1111 and two shunt modules 1112. The analog-to-digital conversion module 1111 samples the two shunt modules 1112 separately, forming a first current sampling path 1101 and a second current sampling path 1102.

The comparison module 113 may include a first comparator 1131 and a second comparator 1132. The first comparator 1131 may receive one sampled value sent by the analog-to-digital conversion module 1111, such as a first current value collected by the first current sampling path 1101, and the second comparator 1132 may receive another sampled value sent by the analog-to-digital conversion module 1111, such as a second current value collected by the second current sampling path 1102. Additionally, the first comparator 1131 and the second comparator 1132 may further receive the preset current threshold input by the threshold input module 112, so that the first comparator 1131 (normally outputting a low level corresponding to logic signal 0) compares the first current value with the preset current threshold, outputting a high level corresponding to logic signal 1 to the driver module 12 when the first current value is greater than the preset current threshold, and outputting a low level corresponding to logic signal 0 to the driver module 12 when the first current value is not greater than the preset current threshold. The second comparator 1132 (normally outputting a high level corresponding to logic signal 1) compares the second current value with the preset current threshold, outputting a low level corresponding to logic signal 0 to the driver module 12 when the second current value is greater than the preset current threshold, and outputting a high level corresponding to logic signal 1 to the driver module 12 when the second current value is not greater than the preset current threshold.

After receiving the level signals output by the first comparator 1131 and the second comparator 1132, the driver module 12 may determine whether a drive signal is received based on the combination of the level signals. For example, if the combination of the received level signals is such that the first comparator 1131 outputs a high level and the second comparator 1132 outputs a low level, the driver module 12 may determine that a drive signal is received. Other combinations are considered as indications that a drive signal is not received. In the case of determining that a drive signal is received, the fuse module 13 is driven to disconnect, thereby disconnecting the circuit under test 20.

Additionally, the control module 114 may read the state information from the driver module 12 in real-time and acquire the current value sampled by the analog-to-digital conversion module 1111, for example, including the first current value and the second current value. The control module 114 may compare the first current value and the second current value with the preset current threshold through software behavior; and verify whether a state of the driver module 12 is a driven state when both the first current value and the second current value are greater than the preset current threshold. If the control module 114 determines through software that both the first current value and the second current value are greater than the preset current threshold and the state of the driver module 12 is not a driven state, that is, a non-driven state, this indicates an overcurrent event in the circuit under test 20 and the circuit under test 20 should be controlled to disconnect, but the driver module 12 does not trigger and drive the fuse of the fuse module 13. In this case, the control module 114 may send a fuse control command to the driver module via the SPI protocol to trigger the driver module 12 to drive the fuse module 13 to fuse based on the fuse control command, thereby controlling the circuit under test 20 to disconnect.

In this way, the driver module is directly connected to the current detection module, and the current detection module directly controls the driver module to drive the fuse module to disconnect the circuit under test, reducing response module nodes in the entire circuit disconnection process, thereby effectively reducing the delay time required to control circuit disconnection during overcurrent in the circuit, and sufficiently reducing the possibility of hazardous events due to overcurrent.

Additionally, the comparison module is provided in the current detection module, and the comparators in the comparison module are used to determine whether circuit disconnection is needed. In this way, the circuit disconnection control process is improved to pure hardware-based control, enhancing the reliability of circuit disconnection. Two or more comparators are provided in the current detection module, so that circuit disconnection is controlled when two or more comparators determine that overcurrent occurs; and the redundant design of hardware behavior is added, reducing the possibility of erroneous circuit disconnection. The control module in the current detection module monitors the state of the driver module in real-time, verifies the control signals output by the GPIO pins, and sends a fuse control command to the driver module via the SPI protocol, to trigger the driver module to drive disconnection of the circuit under test when disconnection should be driven but is not. The redundant design of software behavior is introduced, increasing the possibility that the circuit is correctly disconnected in a case that an overcurrent event occurs in the circuit.

FIG. 7 is a schematic structural diagram of a battery management system provided in some embodiments of this application.

As shown in FIG. 7, a battery management system 100 may include a circuit protection apparatus 10 and a circuit under test 20, where the circuit protection apparatus 10 may be the circuit protection apparatus 10 provided in any of the embodiments described above, and the circuit under test 20 may be any power supply line.

In some embodiments of this application, the circuit under test 20 may, for example, include a power supply bus connected to a power source. The circuit protection apparatus 10 can promptly control the disconnection of the circuit under test 20 in a case that an overcurrent event occurs in the circuit under test 20.

Additionally, embodiments of this application further provide an electric device. The electric device may include the battery management system 100 provided in any of the embodiments described above. Details are not described herein.

The above embodiments are only used to illustrate the technical solutions of this application and not to limit the technical solutions; although this application are described in detail with reference to the foregoing embodiments, those of ordinary skill in the art should understand that they may still modify the technical solutions described in the foregoing embodiments or make equivalent substitutions for some or all of the technical features; such modifications or substitutions do not cause the essence of the corresponding technical solutions to depart from the scope of the technical solutions of the embodiments of this application, and they should be included within the scope of the claims and specification of this application. In particular, as long as there is no structural conflict, the technical features mentioned in the embodiments may be combined in any manner. This application is not limited to the specific embodiments disclosed herein but includes all technical solutions falling within the scope of the claims.

## Claims

1. A circuit protection apparatus, comprising a current detection module, a driver module, and a fuse module, wherein:
the current detection module is connected to the driver module and a circuit under test separately, and the current detection module is configured to detect a current value in the circuit under test, and in a case that the current value is greater than a preset current threshold, send a drive signal to the driver module;
the fuse module is connected in series in the circuit under test; and
an input end of the driver module is connected to the current detection module, an output end of the driver module is connected to the fuse module, and the driver module is configured to drive the fuse module to disconnect the circuit under test upon receiving the drive signal.

2. The circuit protection apparatus according to claim 1, wherein the current detection module comprises a comparison module,
wherein the comparison module is configured to compare the current value with the preset current threshold, and in the case that the current value is greater than the preset current threshold, send a drive signal to the driver module.

3. The circuit protection apparatus according to claim 2, wherein the current detection module further comprises a current collection module and a threshold input module, and an input end of the driver module comprises a signal input end, wherein:
an input end of the current collection module is connected to the circuit under test, an output end of the current collection module is connected to a first input end of the comparison module, and the current collection module is configured to collect a current value in the circuit under test and input the current value to the comparison module;
the threshold input module is connected to a second input end of the comparison module, and the threshold input module is configured to input the preset current threshold to the comparison module; and
an output end of the comparison module is connected to the signal input end of the driver module.

4. The circuit protection apparatus according to claim 3, wherein the comparison module comprises at least two comparators,
wherein a first input end of each of the at least two comparators is connected to the output end of the current collection module, a second input end of each of the at least two comparators is connected to the threshold input module, and an output end of each of the at least two comparators is connected to the input end of the driver module.

5. The circuit protection apparatus according to claim 4, wherein:
each of the at least two comparators is configured to compare the current value with the preset current threshold, and in the case that the current value is greater than the preset current threshold, send a target logic signal to the driver module; and
the drive signal comprises target logic signals sent by the at least two comparators respectively.

6. The circuit protection apparatus according to claim 4 or 5, wherein the current collection module is provided with at least two current sampling paths, wherein a current value collected by one current sampling path is correspondingly input to one comparator.

7. The circuit protection apparatus according to claim 6, wherein the at least two comparators comprise a first comparator and a second comparator, and the signal input end of the driver module comprises a first signal input end and a second signal input end, wherein:
a first input end of the first comparator is connected to the current collection module, a second input end of the first comparator is connected to the threshold input module, an output end of the first comparator is connected to the first signal input end of the driver module, and the first comparator is configured to compare a first current value with the preset current threshold, and in a case that the first current value is greater than the preset current threshold, send a first logic signal to the driver module, wherein the first current value is a current value collected by a first current sampling path in the current collection module;
a first input end of the second comparator is connected to the current collection module, a second input end of the second comparator is connected to the threshold input module, an output end of the second comparator is connected to the second signal input end of the driver module, and the second comparator is configured to compare a second current value with the preset current threshold, and in a case that the second current value is greater than the preset current threshold, send a second logic signal to the driver module, wherein the second current value is a current value collected by a second current sampling path in the current collection module; and
the drive signal comprises the first logic signal and the second logic signal.

8. The circuit protection apparatus according to any one of claims 3 to 7, wherein the current detection module further comprises a control module, and the input end of the driver module comprises a command input end, wherein:
the control module is connected to the output end of the current collection module and the command input end of the driver module, and the control module is configured to acquire the current value collected by the current collection module and state information corresponding to the driver module, and in a case that the current value is greater than the preset current threshold and the state information indicates a non-driven state, send a fuse control command to the driver module; and
the driver module is further configured to drive the fuse module to disconnect the circuit under test upon receiving the fuse control command.

9. The circuit protection apparatus according to any one of claims 3 to 8, wherein the current collection module comprises an analog-to-digital conversion module and a shunt module, wherein:
the shunt module is connected in series in the circuit under test;
an input end of the analog-to-digital conversion module is connected to two ends of the shunt module, forming a current sampling path; and
an output end of the analog-to-digital conversion module is connected to the first input end of the comparison module.

10. The circuit protection apparatus according to any one of claims 1 to 9, wherein the circuit under test comprises a power supply bus connected to a power source.

11. A battery management system, comprising a circuit under test and the circuit protection apparatus according to any one of claims 1 to 10.

12. An electric device, comprising the battery management system according to claim 11.
